# EUROPÄISCHE PATENTANMELDUNG

(11) **EP 2 613 144 A1**
(43) Veröffentlichungstag der Anmeldung: **10.07.2013**
(21) Anmeldenummer: 12150222.3
(22) Anmeldetag: 05.01.2012
(51) Int. Cl.: G01N 29/26, G10K 11/34

(54) **Verbesserung der aktiven Auflösung von Phased-Array Ultraschallprüfköpfen**

(71) Anmelder: Siemens Aktiengesellschaft, 80333 München (DE)
(72) Erfinder: Obermayr, Stefan, 45475 Mülheim (DE)

(57) **Zusammenfassung**

Es wird ein Verfahren zur Durchführung eines Ultraschallscans an einem Untersuchungsobjekt (1) unter Verwendung eines Ultraschallprüfkopfes (2) mit einer Gesamtzahl N von über eine Strecke L verteilt angeordneten Ultraschallelementen (3-1, ..., 3-N) zur Verfügung gestellt. Dabei werden jeweils eine entlang einer jeweiligen Teilstrecke der Strecke L angeordnete Teilmenge der Ultraschallelemente (3-1, ..., 3-N) zu einem jeweiligen virtuellen Ultraschallprüfkopf verschaltet und der jeweilige virtuelle Ultraschallprüfkopf für die Erzeugung eines jeweiligen Ultraschallpulses einer Reihe von Ultraschallpulsen verwendet. Erfindungsgemäß umfassen eine erste Teilmenge eines ersten virtuellen Ultraschallprüfkopfes eine ungeradzahlige Anzahl von Ultraschallelementen (3-1, ..., 3-N) und eine zweite Teilmenge eines zweiten virtuellen Ultraschallprüfkopfes eine geradzahlige Anzahl von Ultraschallelementen (3-1, ..., 3-N).

## Beschreibung

Die vorliegende Erfindung betrifft ein Verfahren zur Durchführung eins Ultraschallscans an einem Untersuchungsobjekt, in das nacheinander mittels eines Ultraschallprüfkopfes Ultraschallpulse in das Untersuchungsobjekt zum Generieren von Pulsechos eingebracht werden.

Die zerstörungsfreie Prüfung von Werkstücken spielt eine wichtige Rolle bei der Qualitätssicherung und Wartung von aufwendig herzustellenden Produkten wie beispielsweise ein Rotor einer Dampfturbine. Der Herstellungsprozess für derartige Rotoren ist anspruchsvoll und aufwendig. Das Zerstören eines Werkstücks im Rahmen der Qualitätskontrolle ist daher nicht wünschenswert. Weiterhin ist es wünschenswert, jedes hergestellte Werkstück auf seine Qualität hin zu überprüfen, was eine zerstörungsfreie Prüfung erfordert. Aber auch im Rahmen der Wiederaufarbeitung von verschlissenen Werkstücken (refurbishment) kommen häufig zerstörungsfreie Prüfungsverfahren zum Einsatz, um die innere Integrität des Gefüges des Werkstücks überprüfen zu können, bevor darüber entschieden wird, ob ein Wiederaufarbeiten möglich ist oder nicht.

Als zerstörungsfreies Prüfungsverfahren für ein Werkstück kommt häufig die Ultraschallprüfung zur Anwendung. Bei dieser wird ein Ultraschallsignal in das Material des Untersuchungsobjektes eingeschallt und anhand der Abschwächung durch das Untersuchungsobjekt hindurch tretender Signale oder anhand der Intensität im Innern des Untersuchungsobjektes reflektierter Signale eine Aussage über das Gefüge im Inneren abgeleitet. Dabei werden Ultraschallpulse in zeitlich kurzen Abständen in das Untersuchungsobjekt eingebracht. Defekte im Inneren des Untersuchungsobjektes, beispielsweise Risse, Kavitäten, etc. erzeugen Echos der Ultraschallpulse, aus denen auf die Lage und die Größe des Defekts zurück geschlossen werden kann. Aber auch in der Medizintechnik bieten sich vielfältige Anwendungen für die Ultraschalltechnik, beispielsweise in der pränatalen Diagnostik.

In der Phased-Array Ultraschalltechnologie werden in einem Ultraschallprüfkopf mehrere Ultraschallelemente zusammengeschaltet, wobei die einzelnen Ultraschallelemente nach bestimmten sogenannten "Focal Laws", auch Sendemodulierungsfolgen genannt, zum Aussenden eines Ultraschallpulses aktiviert werden. Dabei können Form, Fokussierung und Richtung des resultierenden Ultraschallpulses durch die Zeitpunkte, zu denen die einzelnen Ultraschallelemente aktiviert werden, vorgegeben werden.

Man spricht beispielsweise von einem Linienscan, wenn eines oder mehrere benachbarte Ultraschallelemente für einen Einzelpuls gleichzeitig aktiviert werden, wodurch sich ein senkrecht von dem Ultraschallprüfkopf entfernender Ultraschallpuls ergibt, und mehrere solcher Einzelpulse mit nebeneinanderliegenden Pulsmittelpunkten in das Prüfobjekt eingebracht werden.

Ultraschallpulse mit einem abweichenden Einschallwinkel können erzeugt werden, indem jedes der benachbarten Ultraschallelemente mit einem zeitlichen Versatz zu dem jeweils vorhergehenden Ultraschallelement aktiviert wird, wobei der zeitliche Versatz den Einschallwinkel des jeweiligen Ultraschallpulses und die Richtung der Aktivierung das Vorzeichen des Einschallwinkels bestimmen. Für einen Winkelscan, bei denen Ultraschallpulse unter verschiedenen Einschallwinkeln in das Untersuchungsobjekt eingebracht werden, um ein Ultraschallbild in der Form eines Kreissegmentes zu erhalten, können derart eine Reihe von Ultraschallpulsen in einem Winkelbereich von beispielsweise -40° bis + 40° erzeugt werden.

In ähnlicher Weise können auch fokussierte Ultraschallpulse erzeugt werden, also Ultraschallpulse, die in einem Fokalpunkt oder in einer Fokalfläche zusammenlaufen, wobei die Entfernung des Fokalpunktes oder der Fokalfläche vom Ultraschallprüfkopf durch die Sendemodulierungsfolge eingestellt werden kann.

Als Ultraschallscan wird hier verallgemeinernd eine Reihe von Ultraschallpulsen bezeichnet, die mit unterschiedlichen Parametern von einer Mehrzahl von Ultraschallelementen erzeugt und deren Echos gegebenenfalls zu einem Einzelbild zusammengefasst werden. Ein Ultraschallscan kann also insbesondere ein Linienscan oder ein Winkelscan sein. Bei einem Ultraschallscan werden die einzelnen Ultraschallpulse wenigstens näherungsweise in einer Ebene in das Untersuchungsobjekt eingeschallt, so dass das Ultraschallecho der Ultraschallpulse eine Schnittfläche durch das Untersuchungsobjekt charakterisiert.

Allgemein ist es wünschenswert, eine möglichst hohe Auflösung des Ultraschallscans zu erreichen, da andernfalls die Prüfempfindlichkeit gering bleibt und das Risiko besteht, kleine Strukturen von Interesse wie Ungänzen zu übersehen oder fälschlich als vernachlässigbar zu bewerten.

Bei einem Phased-Array Ultraschallscan wird die maximal erzielbare Auflösung üblicherweise durch den Abstand benachbarter Ultraschallelemente, dem sogenannten Pitch, vorgegeben, da die seitlichen Begrenzungen eines durch die für einen jeweiligen Ultraschallpuls zu einem virtuellen Ultraschallprüfkopf zusammengeschalteten Ultraschallelemente erzeugten Ultraschallpulses durch die Position der Ultraschallelemente bestimmt werden.

Die Auflösung kann durch Kompromisse erhöht werden. So ist es beispielsweise möglich, durch Erhöhung der Prüffrequenz und/oder Verringerung der aktiven Ultraschallprüfkopflänge einen engeren Pitch zu realisieren. Dies ist jedoch bauteil-und materialabhängig nicht immer möglich und erfordert eine Neuanfertigung des Ultraschallprüfkopfes. Alternativ kann die Prüffahrt mit einem Versatz von weniger als einem Pitch wiederholt werden. Nachteilig ist dabei jedoch neben dem erhöhten Zeitaufwand der enorme Aufwand für eine präzise Führung des Ultraschallprüfkopfes.

Aufgabe der vorliegenden Erfindung ist es daher, ein Verfahren und eine Vorrichtung einzuführen, die die Auflösung eines Ultraschallscans erhöhen, ohne aufwendige Änderungen der Hardware zu bedingen.

Diese Aufgabe wird durch ein Verfahren zur Durchführung eines Ultraschallscans nach Anspruch 1 und durch eine Vorrichtung nach Anspruch 9 gelöst. Die abhängigen Ansprüche enthalten die vorteilhaften Ausgestaltungen der Erfindung.

In dem erfindungsgemäßen Verfahren zur Durchführung eines Ultraschallscans an einem Untersuchungsobjekt wird ein Ultraschallprüfkopf mit einer Gesamtzahl N von über eine Strecke L verteilt angeordneten Ultraschallelementen verwendet. Für die Erzeugung eines jeweiligen Ultraschallpulses einer Reihe von Ultraschallpulsen wird ein jeweiliger virtueller Ultraschallprüfkopf verwendet, der gebildet wird, indem eine entlang einer jeweiligen Teilstrecke der Strecke L angeordnete Teilmenge der Ultraschallelemente verschaltet wird. Erfindungsgemäß umfassen dabei eine erste Teilmenge eines ersten virtuellen Ultraschallprüfkopfes eine ungeradzahlige Anzahl von Ultraschallelementen und eine zweite Teilmenge eines zweiten virtuellen Ultraschallprüfkopfes eine geradzahlige Anzahl von Ultraschallelementen.

Die Erfindung hat den Vorteil, dass der Mittelpunkt der Ultraschallpulse mit einer Genauigkeit von einem halben Pitch eingestellt werden kann. Wird für einen Ultraschallpuls eine geradzahlige Anzahl von Ultraschallelementen zu einem virtuellen Ultraschallprüfkopf verschaltet, so wird der Mittelpunkt des resultierenden Ultraschallpulses mittig zwischen zwei benachbarten Ultraschallelementen liegen. Wird hingegen eine ungerade Anzahl von Ultraschallelementen zu einem virtuellen Ultraschallprüfkopf verschaltet, wird der Mittelpunkt des resultierenden Ultraschallpulses von einem mittleren Ultraschallelement der zu dem virtuellen Ultraschallprüfkopf verschalteten Ultraschallelemente markiert werden. Dadurch kann ohne Änderung der Hardware des Ultraschallprüfkopfes nur unter Abänderung der Ansteuerung der Ultraschallelemente die Auflösung des Ultraschallscans gegenüber dem Stand der Technik verdoppelt werden. Eine bestehende Vorrichtung zum Durchführen eines Ultraschallscans kann daher durch Anpassung der Steuersoftware zum Ausführen des erfindungsgemäßen Verfahrens ausgebildet werden.

Generell kann im Rahmen der Erfindung ein Ultraschallelement eines virtuellen Ultraschallprüfkopfes für das Aussenden eines Ultraschallpulses inaktiv bleiben, wenn es beiderseits des Ultraschallelementes jeweils mindestens ein Ultraschallelement gibt, das für das Aussenden des Ultraschallpulses aktiviert wird. Allerdings wird die Gleichmäßigkeit der Wellenfront des Ultraschallpulses und damit auch die Qualität des Ultraschallscans negativ beeinträchtigt, wenn einzelne Ultraschallelemente inaktiv bleiben. Deshalb werden bei allen bevorzugten Ausführungsformen der Erfindung für das Aussenden eines Ultraschallpulses alle zu einem virtuellen Ultraschallprüfkopf verschalteten Ultraschallelemente aktiviert.

Bevorzugt beträgt eine Differenz zwischen der ungeradzahligen Anzahl und der geradzahligen Anzahl eins. In diesem Fall weichen die Querdurchmesser der einzelnen Ultraschallpulse um maximal einen Pitch voneinander ab, wodurch eine bestmögliche Gleichmäßigkeit der verschiedenen Ultraschallpulse gewährleistet ist.

Besonders bevorzugt unterscheidet sich eine erste Teilstrecke des ersten virtuellen Ultraschallprüfkopfes von einer zweiten Teilstrecke des zweiten virtuellen Ultraschallprüfkopfes um eine Differenzstrecke von L/(N-1). Die Differenzstrecke repräsentiert den Pitch des Ultraschallprüfkopfes.

Vorteilhafterweise ist ein erster Mittelpunkt der ersten Teilstrecke eine Offsetstrecke von L/(2N-2) von einem zweiten Mittelpunkt der zweiten Teilstrecke entfernt. Die Offsetstrecke entspricht dabei einem halben Pitch.

Bei vorteilhaften Ausführungsformen der Erfindung werden die geradzahlige Anzahl und die ungeradzahlige Anzahl von Ultraschallelementen mit der gleichen Gesamtleistung angesteuert. Daraus ergeben sich Ultraschallpulse mit der gleichen Leistung, so dass die unterschiedliche Anzahl von für einen Ultraschallpuls aktivierten Ultraschallelementen keine Auswirkungen auf die Intensität der von den Ultraschallpulsen hervorgerufenen Pulsechos hat. Andernfalls würde dieselbe Ungänze bei einer Werkstückprüfung unterschiedlich starke Pulsechos hervorrufen.

Bevorzugt werden für einen einzelnen Ultraschallscan wenigstens 2*N+2 abzüglich der ungeradzahligen und der geradzahligen Anzahl verschiedene virtuelle Prüfköpfe verwendet. Das heißt, dass vorzugsweise für jede mögliche Verschiebung der virtuellen Prüfköpfe ein Ultraschallpuls ausgesendet wird.

Besonders bevorzugt sind der Ultraschallscan ein Linienscan und die Strecke L gerade. Alternativ kann die Erfindung aber auch beispielsweise bei Winkelscans Anwendung finden.

Ein zweiter Aspekt der Erfindung führt eine Vorrichtung zur Durchführung eines Ultraschallscans an einem Untersuchungsobjekt ein. Die Vorrichtung weist einen zum Einbringen von Ultraschallpulsen in das Untersuchungsobjekt ausgebildeten Ultraschallprüfkopf mit einer Gesamtzahl N von über eine Strecke L verteilt angeordneten Ultraschallelementen und eine mit dem Ultraschallprüfkopf verbundene Steuereinheit zum Vorgeben einer Sendemodulierungsfolge auf. Die Steuereinheit ist dabei dazu ausgebildet, das Verfahren der Erfindung auszuführen.

Ein dritter Aspekt der Erfindung betrifft einen Datenträger mit einem Steuerungsprogramm für eine Vorrichtung zur Durchführung eines Ultraschallscans an einem Untersuchungsobjekt.

Die Vorrichtung umfasst einen zum Einbringen von Ultraschallpulsen in das Untersuchungsobjekt ausgebildeten Ultraschallprüfkopf mit einer Gesamtzahl N von über eine Strecke L verteilt angeordneten Ultraschallelementen und eine mit dem Ultraschallprüfkopf verbundene Steuereinheit zum Vorgeben einer Sendemodulierungsfolge auf. Das Steuerungsprogramm ist dabei dazu ausgebildet, das erfindungsgemäße Verfahren auszuführen, wenn es von der Steuereinheit der Vorrichtung ausgeführt wird.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.
Figur 1 zeigt eine Vorrichtung zur Durchführung von Ultraschallscans, wie sie für die Erfindung verwendet werden kann.
Figur 2 illustriert eine erste Ausführungsform des erfindungsgemäßen Verfahrens.
Figur 3 illustriert eine zweite Ausführungsform des erfindungsgemäßen Verfahrens.

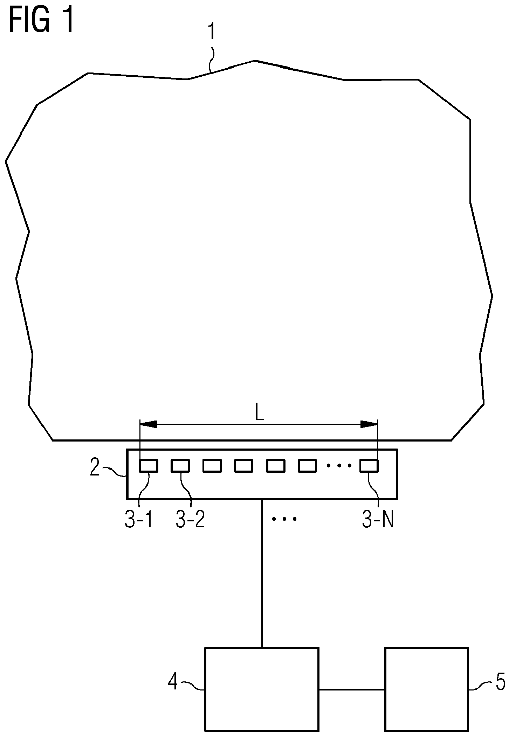

Figur 1 zeigt eine Vorrichtung zur Durchführung von Ultraschallscans, wie sie für die Erfindung verwendet werden kann. Ein Phased-Array Ultraschallprüfkopf 2 wird für einen Ultraschallscan auf ein Untersuchungsobjekt 1 aufgesetzt. Der Ultraschallprüfkopf 2 enthält eine Anzahl N von Ultraschallelementen 3-1 bis 3-N, die entlang einer Strecke L angeordnet sind. Vorzugsweise sind die Ultraschallelemente dabei in gleichen Abständen zueinander angeordnet. Die Ultraschallelemente 3-1 bis 3-N beziehungsweise Teilmengen der N Ultraschallelemente können zu einem virtuellen Ultraschallprüfkopf verschaltet werden. Ein solcher virtueller Ultraschallprüfkopf wird dann zum Einschallen eines Ultraschallpulses in das Untersuchungsobjekt und ggf. zum Detektieren etwaiger Pulsechos verwendet.

Die Aktivierung der einzelnen in einem virtuellen Ultraschallprüfkopf verschalteten Ultraschallelemente erfolgt gemäß sogenannten "focal laws", die Reihenfolge und Zeitpunkte der Aktivierung der einzelnen Ultraschallelemente vorgeben und so die Eigenschaften des resultierenden Ultraschallpulses bestimmen. Diese Ansteuerung der Ultraschallelemente wird von einer Steuereinheit 4 durchgeführt, die dafür auf einen Datenträger 5 mit einem Steuerungsprogramm zurückgreift. Durch Aufspielen eines neuen Steuerungsprogramms kann eine bestehende Vorrichtung zur Durchführung eines Ultraschallscans für die Ausführung des erfindungsgemäßen Verfahrens eingerichtet werden.

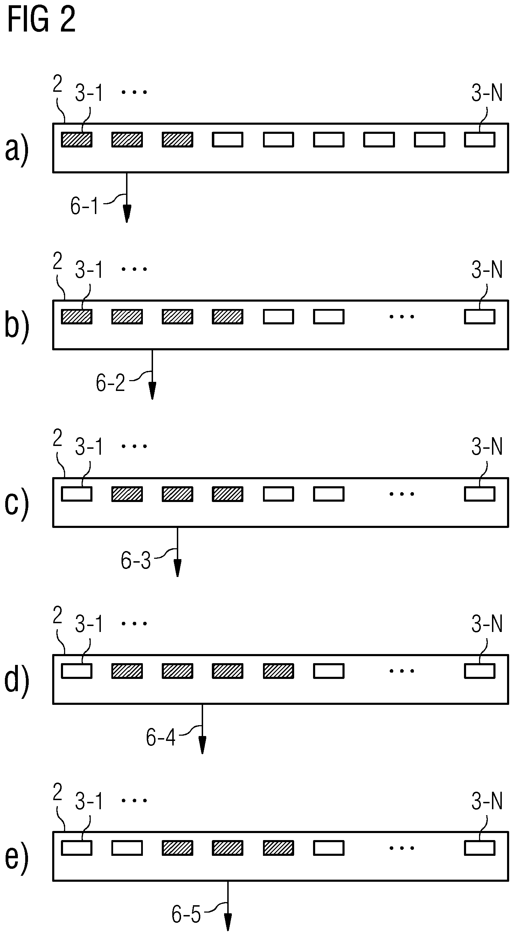

Figur 2 illustriert eine erste Ausführungsform des erfindungsgemäßen Verfahrens. Figur 2 umfasst fünf Diagramme a) bis e), die den Ultraschallprüfkopf 2 von Figur 1 in verschiedenen Konfigurationen zeigen. Jedes Diagramm zeigt dabei diejenigen Elemente, die zu einem Zeitpunkt des erfindungsgemäßen Verfahrens zu einem jeweiligen virtuellen Ultraschallprüfkopf verschaltet sind. Dabei sind die dunkel markierten Ultraschallelemente zu dem Ultraschallprüfkopf verschaltet und werden im Zuge der Erzeugung eines Ultraschallpulses aktiviert, während die hellen Ultraschallelemente inaktiv bleiben.

Im Verlauf des Verfahrens kann die Reihenfolge der Diagramme a) bis e) eingehalten werden, das heißt, Ultraschallpulse sequentiell mit von einem Ende des Ultraschallprüfkopfes 2 zum anderen angeordneten Mittelpunkten 6-1 bis 6-5 erzeugt werden. Es ist aber ebenso gut möglich, beliebige Reihenfolgen von Ultraschallpulsen vorzusehen, so dass die in den Diagrammen angezeigten Mittelpunkte 6-1 bis 6-5 der für die jeweils gezeigten virtuellen Prüfköpfe resultierenden Ultraschallpulse beispielsweise in ungeordneter Reihenfolge abgearbeitet werden.

Wie in Figur 2 gezeigt, sind in den Diagrammen a), c) und e) jeweils eine ungerade Anzahl von Ultraschallelementen 3-1 bis 3-N zu einem virtuellen Ultraschallprüfkopf verschaltet, während in den Diagrammen b) und d) es eine gerade Anzahl von Ultraschallelementen 3-1 bis 3-N sind. Im gezeigten Beispiel ist dabei die gerade Anzahl größer als die ungerade, es ist aber ebenso gut möglich, die gerade Anzahl kleiner als die ungerade zu wählen. Auch können in einem Durchlauf des Verfahrens prinzipiell unterschiedliche gerade Anzahlen und unterschiedliche ungerade Anzahlen gewählt werden. Vorzugsweise kommen jedoch für einen einzelnen Ultraschallscan nur jeweils eine gerade beziehungsweise ungerade Anzahl von zu einem jeweiligen virtuellen Ultraschallprüfkopf verschalteten Ultraschallelementen zur Verwendung. Besonders bevorzugt beträgt dabei eine Differenz zwischen der ungeraden und der geraden Anzahl eins.

In Figur 2 sind die Mittelpunkte 6-1 bis 6-5 der sich aus den jeweils zu einem virtuellen Ultraschallprüfkopf zusammengeschalteten Ultraschallelementen ergebenden Ultraschallpulse gekennzeichnet. Wie zu sehen ist, kann der Ort der Mittelpunkte mit einer Genauigkeit von einem halben Pitch eingestellt werden, wodurch die Auflösung des Ultraschallscans gegenüber dem Stand der Technik durch Veränderung der Ansteuerung der Ultraschallelemente des Ultraschallprüfkopfes verdoppelt wird.

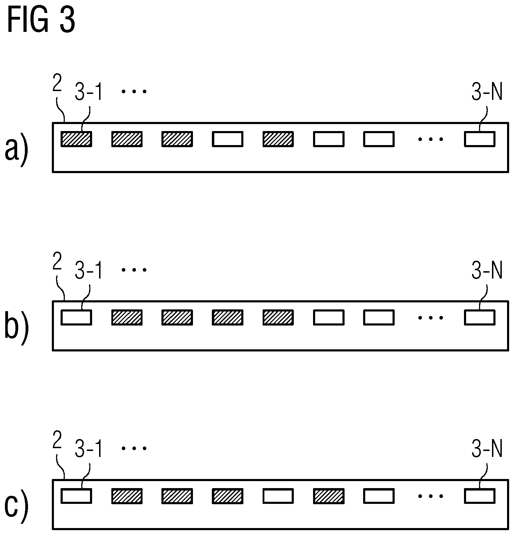

Figur 3 illustriert eine zweite Ausführungsform des erfindungsgemäßen Verfahrens. Bei dieser Ausführungsform werden in den Diagrammen a) und c) jeweils eine ungerade Zahl Ultraschallelemente zu einem virtuellen Ultraschallprüfkopf verschaltet, nämlich in Diagramm a) die Ultraschallelemente 3-1 bis 3-5 und in Diagramm c) die Ultraschallelemente 3-2 bis 3-6, während in Diagramm b) eine gerade Anzahl Ultraschallelemente, nämlich die Ultraschallelemente 3-2 bis 3-5, verschaltet werden. Dabei bleibt jedoch die Anzahl der jeweils aktivierten Ultraschallelemente für alle Ultraschallpulse gleich, da in den in den Diagrammen a) und c) gezeigten virtuellen Ultraschallprüfköpfen die Ultraschallelemente 3-4 beziehungsweise 3-5 inaktiv bleiben. Dies besitzt den Nachteil einer ungleichmäßigen Wellenfront der resultierenden Ultraschallpulse, bietet jedoch eine einfache Möglichkeit, die für jeden Ultraschallpuls aufgebrachte Leistung konstant zu halten. Ein virtueller Ultraschallprüfkopf umfasst dabei diejenige minimale Anzahl von nebeneinander angeordneten Ultraschallelementen, die alle Ultraschallelemente umfasst, die für den von dem virtuellen Ultraschallprüfkopf erzeugten Ultraschallpuls aktiviert werden. Wie am Beispiel von Figur 3 gezeigt, muss die Zahl der zu einem virtuellen Ultraschallprüfkopf verschalteten Ultraschallelemente nicht notwendigerweise gleich der Zahl der im Rahmen der Erzeugung des Ultraschallpulses durch den virtuellen Ultraschallprüfkopf aktivierten Ultraschallelemente sein. Allerdings sind Ausführungsformen der Erfindung wegen der größeren Gleichmäßigkeit des Ultraschallpulses bevorzugt, bei denen die beiden Zahlen gleich sind.

Die vorliegende Erfindung wurde unter Bezugnahme auf die Figuren anhand konkreter Ausführungsbeispiele beschrieben. Abwandlungen von diesen Ausführungsbeispielen sind jedoch möglich, ohne den Schutzbereich der Ansprüche zu verlassen.

## Patentansprüche

1. Ein Verfahren zur Durchführung eines Ultraschallscans an einem Untersuchungsobjekt (1) unter Verwendung eines Ultraschallprüfkopfes (2) mit einer Gesamtzahl N von über eine Strecke L verteilt angeordneten Ultraschallelementen (3-1, ..., 3-N),
wobei eine entlang einer jeweiligen Teilstrecke der Strecke L angeordnete Teilmenge der Ultraschallelemente (3-1, ..., 3-N) zu einem jeweiligen virtuellen Ultraschallprüfkopf verschaltet und der jeweilige virtuelle Ultraschallprüfkopf für die Erzeugung eines jeweiligen Ultraschallpulses einer Reihe von Ultraschallpulsen verwendet wird,
**dadurch gekennzeichnet, dass**
eine erste Teilmenge eines ersten virtuellen Ultraschallprüfkopfes eine ungeradzahlige Anzahl von Ultraschallelementen (3-1, ..., 3-N) und eine zweite Teilmenge eines zweiten virtuellen Ultraschallprüfkopfes eine geradzahlige Anzahl von Ultraschallelementen (3-1, ..., 3-N) umfassen.

2. Das Verfahren nach dem vorhergehenden Anspruch,
bei dem eine Differenz zwischen der ungeradzahligen Anzahl und der geradzahligen Anzahl eins beträgt.

3. Das Verfahren nach einem der vorhergehenden Ansprüche,
bei dem sich eine erste Teilstrecke des ersten virtuellen Ultraschallprüfkopfes von einer zweiten Teilstrecke des zweiten virtuellen Ultraschallprüfkopfes unterscheidet.

4. Das Verfahren der beiden vorhergehenden Ansprüche,
bei denen sich die erste Teilstrecke von der zweiten Teilstrecke um eine Differenzstrecke von L/(N-1) unterscheidet.

5. Das Verfahren nach einem der vorhergehenden Ansprüche,
bei dem ein erster Mittelpunkt der ersten Teilstrecke eine Offsetstrecke von L/(2N-2) von einem zweiten Mittelpunkt der zweiten Teilstrecke entfernt ist.

6. Das Verfahren nach einem der vorhergehenden Ansprüche,
bei dem die geradzahlige Anzahl und die ungeradzahlige Anzahl von Ultraschallelementen (3-1, ..., 3-N) mit der gleichen Gesamtleistung angesteuert werden.

7. Das Verfahren nach einem der vorhergehenden Ansprüche,
bei dem wenigstens 2*N+2 abzüglich der ungeradzahligen und der geradzahligen Anzahl verschiedene virtuelle Prüfköpfe für einen einzelnen Ultraschallscan verwendet werden.

8. Das Verfahren nach einem der vorhergehenden Ansprüche,
bei dem der Ultraschallscan ein Linienscan und die Strecke L gerade ist.

9. Eine Vorrichtung zur Durchführung eines Ultraschallscans an einem Untersuchungsobjekt (1),
die einen zum Einbringen von Ultraschallpulsen in das Untersuchungsobjekt (1) ausgebildeten Ultraschallprüfkopf (2) mit einer Gesamtzahl N von über eine Strecke L verteilt angeordneten Ultraschallelementen (3-1, ..., 3-N) und eine mit dem Ultraschallprüfkopf (2) verbundene Steuereinheit (4) zum Vorgeben einer Sendemodulierungsfolge aufweist, **dadurch gekennzeichnet, dass**
die Steuereinheit (4) ausgebildet ist, das Verfahren von einem der vorhergehenden Ansprüche auszuführen.

10. Ein Datenträger (5) mit einem Steuerungsprogramm für eine Vorrichtung zur Durchführung eines Ultraschallscans an einem Untersuchungsobjekt (1),
die einen zum Einbringen von Ultraschallpulsen in das Untersuchungsobjekt (1) ausgebildeten Ultraschallprüfkopf (2) mit einer Gesamtzahl N von über eine Strecke L verteilt angeordneten Ultraschallelementen (3-1, ..., 3-N) und eine mit dem Ultraschallprüfkopf (2) verbundene Steuereinheit (4) zum Vorgeben einer Sendemodulierungsfolge aufweist, wobei das Steuerungsprogramm ausgebildet ist, das Verfahren nach einem der Ansprüche 1 bis 8 auszuführen, wenn es von der Steuereinheit (4) der Vorrichtung ausgeführt wird.
